# DEMANDE DE BREVET EUROPEEN

(11) **EP 1 782 693 A1**
(43) Date de publication de la demande: **09.05.2007**
(21) Numéro de dépôt: 06301094.6
(22) Date de dépôt: 27.10.2006
(51) Int. Cl.: A22C 15/00

(54) **Machine de chargement sur barres de saucissons, saucisses, et similaires frais**

(30) Priorité: 02.11.2005 FR 0553306
(71) Demandeur: Bonnet, Georges, 1206 Geneve (CH)
(72) Inventeur: Bonnet, Georges, 1206 Geneve (CH)
(74) Mandataire: Dupuis, François

(57) **Abrégé**

La machine est agencée avec dans sa partie arrière une zone de stockage (Z1) de barres (B) disposées en inclinaison pour amener les barres une à une vers un moyen de transfert (MT1) autorisant le positionnement des barres (4) une à une à un poste (Z2) de chargement de la barre avec une pluralité de saucissons, et une zone (Z3) à l'avant de la machine permettant le positionnement manuel par un ou des opérateurs sur des modules (1) déplaçables en translation selon un premier chemin de guidage (C1) extérieur, chaque module étant le support d'une pince ciseau (2) déplaçable. Chaque ligature (L) en extrémité d'un saucisson (S) est accrochée et suspendue entre le module (1) et sa pince ciseau (2) associée en vue d'être translatées d'une position de prise en charge du saucisson, vers une position d'enfilage de la ligature autour de la barre (2), puis de remise en position. La machine est agencée avec un second chemin de guidage (C2) assurant des fonctions de guidage et d'actionnement qui permettent le déplacement relatif de la pince ciseau par rapport à son module support selon la position et phase opératoire.

## Description

L'invention se rattache au secteur technique de la salaison et du matériel machine intervenant depuis la fabrication des saucissons, saucisses et autres jusqu'à leur séchage en chambres ventilées pour leur conditionnement. Dans la suite de la description, on utilisera le terme général « saucisson » pour identifier les saucissons, saucisses et produits similaires.

A la connaissance du demandeur, la mise en barre des saucissons s'effectue de manière manuelle par un ou des opérateurs qui enfilent par la ligature les saucissons pour les mettre en suspension sur des barres destinées ensuite à leur tour à être mises en suspension sur des structures supports dans des locaux réfrigérés et ventilés jusqu'à ce que les saucissons frais soient propres à la consommation.

La mise en barre des saucissons est une opération obligatoire, chaque saucisson devant être ventilé et séché pendant une période de temps préétablie. Chaque saucisson fabriqué présente une ficelle qui sert aussi à sa suspension sur des crochets et similaires et présentation dans les étals de vente. La barre de chargement peut comprendre, sur sa longueur, une pluralité de gorges espacées réceptrices des ligatures. On connaît à cet effet un automatisme de chargement de barres à l'arrière d'une machine par le brevet US 5.238.353.

L'enfilage manuel des saucissons un à un est long, peu pratique, fastidieux et pénible à longueur de journée. Un automatisme a été décrit dans le brevet n° 92/03929 qui définit néanmoins un mécanisme très complexe et coûteux.

La démarche du Demandeur a donc été de s'intéresser et de concevoir une structure qui facilite cette opération de chargement sur barres de saucissons et produits similaires avec des conditions de productivité très largement améliorées et qui puisse s'intégrer dans une installation générale facilement.

Une autre démarche du demandeur a été d'essayer d'automatiser au maximum cette opération avec une machine autonome, de faible encombrement, et qui limite les interventions manuelles d'opérateurs au seul pré positionnement en amont des saucissons, et à l'évacuation des barres remplies de saucissons, toutes les autres phases étant automatisées.

Le but recherché par le Demandeur a donc été de créer une machine qui réponde à ces objectifs, qui soit de conception simple, autonome, et autorise la mise en barre des saucissons avec des gains de productivité majeurs.

La machine conçue et imaginée par le Demandeur répond à l'ensemble de ces objectifs.

Selon une première caractéristique de l'invention, la machine de chargement sur barres de saucissons, saucisses et similaires frais, du type agencée avec dans sa partie arrière une zone de stockage de barres disposées en inclinaison pour amener les barres une à une vers un moyen de transfert autorisant le positionnement des barres une à une à un poste de chargement de la barre avec une pluralité de saucissons, et dans sa partie avant une zone de chargement des saucissons, est remarquable en ce qu'elle comprend une zone à l'avant de la machine permettant le positionnement manuel des ligatures de saucissons par un ou des opérateurs sur des modules déplaçables en translation selon un premier chemin de guidage extérieur, continu et fermé, et en ce que chaque module est le support d'une pince ciseau déplaçable dans un plan perpendiculaire au sens de défilement des modules, ledit premier chemin de guidage étant tel qu'il permette le chargement des modules supports des blocs pinces, puis la mise sous barres des saucissons, et en ce que chaque ligature en extrémité d'un saucisson est accrochée et suspendue entre le module et sa pince ciseau associée en vue d'être translatées d'une position de prise en charge du saucisson, vers une position d'enfilage de la ligature autour de la barre, puis de remise en position, et en ce que la machine est agencée avec un second chemin de guidage assurant des fonctions de guidage et d'actionnement qui permettent le déplacement relatif de la pince ciseau par rapport à son module support selon la position et phase opératoire, et en ce que les deux chemins de guidage en circuit fermé sont agencés respectivement pour autoriser, pour le premier chemin, le positionnement et le guidage des modules porte pince selon un cycle de translation continu et, pour le second chemin, pour autoriser le mouvement relatif transversal des pinces par rapport au module support pour permettre la mise en forme de la ligature du saucisson destiné à être mis sur la barre, et en ce que le second chemin est disposé intérieurement au premier chemin, et en ce que le chemin de guidage secondaire présente une partie avant dont la caractéristique est de ne pas être concentrique à la partie curviligne du circuit principal, en se rapprochant de celui-ci vers la zone d'enfilage des ligatures sur la barre à charger de saucissons.

Ces caractéristiques et d'autres encore ressortiront bien de la suite de la description.

Pour fixer l'objet de l'invention illustrée d'une manière non limitative aux figures des dessins où :
- la figure 1 est une vue en perspective de face de la machine de chargement sur barres des saucissons.
- la figure 2 est une vue de côté et à caractère schématique de la machine selon la figure 1 montrant en particulier l'emmagasinage et le stockage des barres, l'enfilage des saucissons sur une barre, le transfert de la barre chargée de saucissons vers une zone de prélèvement de la barre chargée.
- la figure 3 est une vue à caractère schématique et en plan de la machine selon l'invention montrant le positionnement et la translation dans un premier chemin de guidage de modules support chacun d'une pince ciseau sur laquelle se positionne la ligature du saucisson, et un second chemin de guidage intérieur recevant des moyens commandant l'ouverture / fermeture des pinces, la barre réceptrice des saucissons.
- les figures 3A, 3B, 3C, 3D, 3E sont des vues à caractère schématique illustrant selon les flèches F1, F2, F3, F4, F5 la position des modules et des pinces ciseau avec la configuration de la ligature du saucisson, selon les différentes phases de positionnement.
- la figure 4 est une vue partielle et en perspective d'un module porte pince après dépose de la ligature d'un saucisson et avant ouverture et mise en forme de la ligature.
- la figure 5 est une vue partielle et en perspective selon la figure 4 du module porte pince avec mise en forme de la ligature pour s'engager autour de la barre support d'une pluralité de saucissons.
- la figure 6 est une vue à caractère schématique illustrant l'arrière de la machine.

Afin de rendre plus concret l'objet de l'invention, on le décrit maintenant d'une manière non limitative illustrée aux figures des dessins.

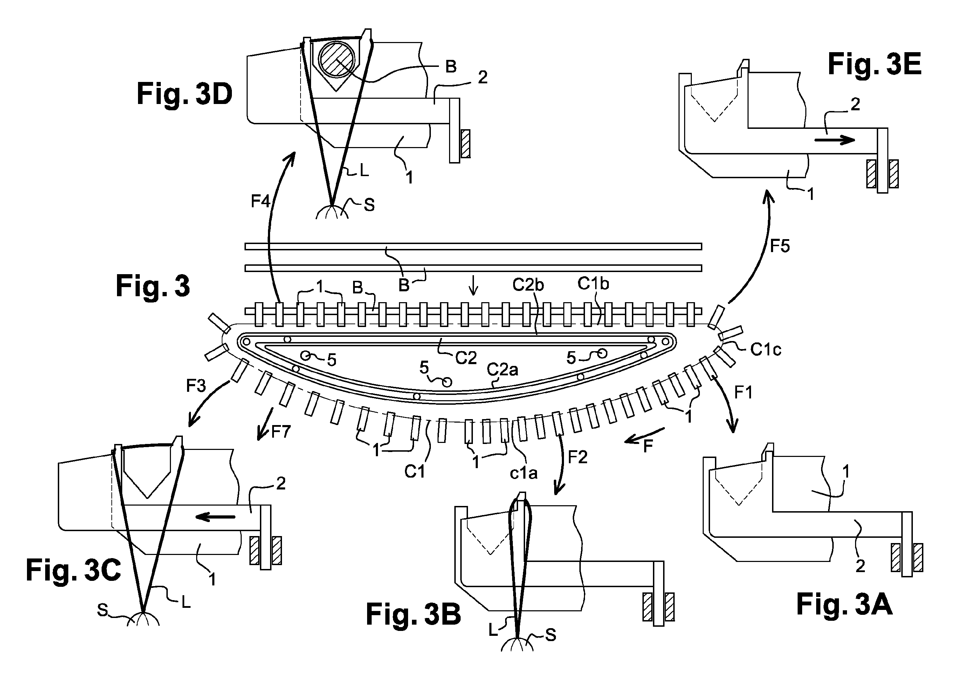

La machine de chargement sur barres de saucissons est référencée dans son ensemble par (M), les saucissons par (S), et les barres par (B). Cette machine selon l'invention est ainsi agencée avec dans sa partie arrière une zone de stockage (Z1) de barres (B) disposées en inclinaison pour amener les barres une à une vers un moyen de transfert (MT1) autorisant le positionnement des barres (4) une à une à un poste (Z2) de chargement de la barre avec une pluralité de saucissons. La machine comprend aussi une zone (Z3) à l'avant de la machine permettant le positionnement manuel par un ou des opérateurs sur des modules (1) déplaçables en translation selon un premier chemin de guidage (C1) extérieur, continu et fermé. Chaque module est le support d'une pince ciseau (2) déplaçable dans un plan perpendiculaire au sens de défilement des modules, ledit premier chemin de guidage étant tel qu'il permette le chargement des modules supports des blocs pinces, puis la mise sous barres des saucissons. La machine est aussi agencée de telle manière que les ligatures (L) ou ficelles en extrémité des saucissons (S) puissent être accrochées et suspendues entre le module (1) et sa pince ciseau (2) associée en vue d'être translatées d'une position de prise en charge d'un saucisson, vers une position d'enfilage de la ligature correspondante autour de la barre (2), puis de remise en position. L'avancement se fait selon la flèche F de la figure 3.

La machine est aussi agencée avec un second chemin de guidage (C2) assurant des fonctions de guidage et d'actionnement qui permettent le déplacement relatif de la pince ciseau par rapport à son module support selon la position et phase opératoire. La machine est enfin agencée avec des seconds moyens (MT2) qui transfèrent la barre (B) pleine chargée de saucissons (S) vers une zone de stockage (ZS) des barres pleines de saucissons en vue de leur évacuation, et mise par exemple sur des chariots de manutention connus pour le transport dans des chambre de séchage.

Il convient dès lors d'exposer plus en détail la conception de la machine.

La machine comprend un châssis porteur (3) représenté aux dessins de manière schématique à partir duquel est disposée une plateforme (4) support de mécanisme, ladite plateforme étant montée sur des supports verticaux (5). Le châssis porteur est ainsi agencé sur ces côtés latéraux avec une configuration en portique (6) support d'autres éléments.

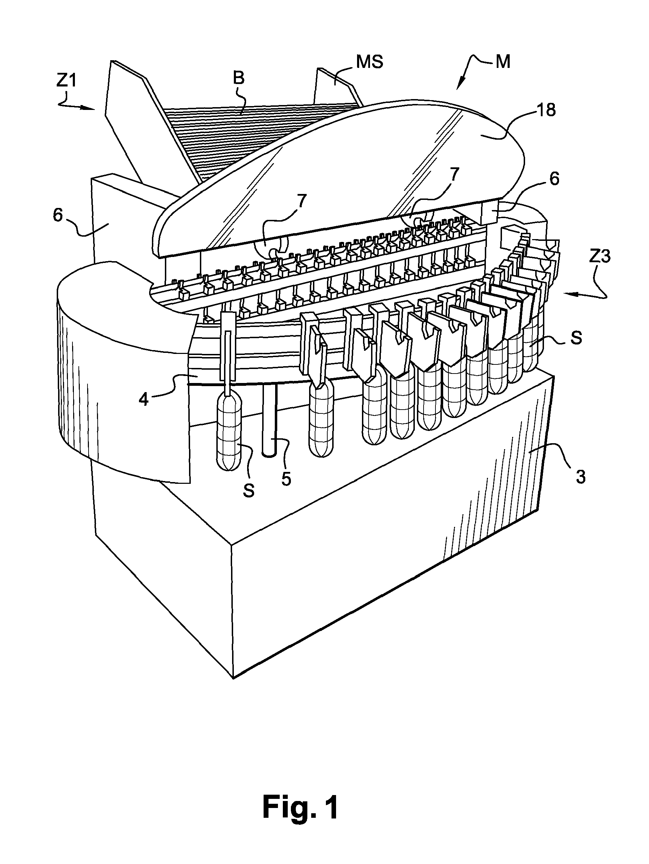

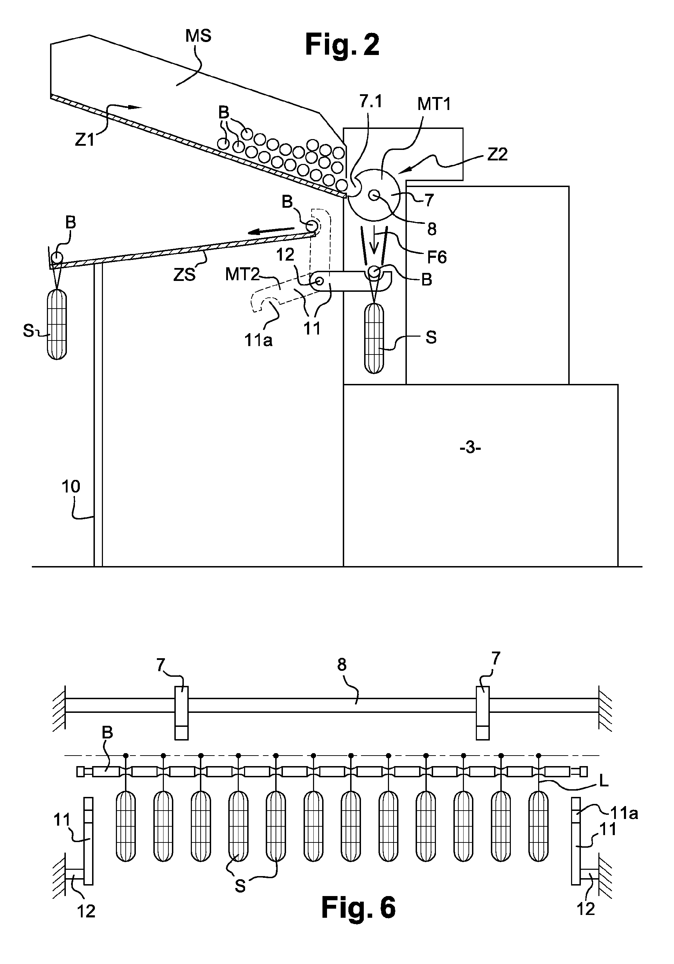

On a ainsi représenté en se référant aux figures 1 et 2, à l'arrière de la machine dans la zone (Z1) un magasin de stockage (MS) des barres, un dispositif de prélèvement des barres (MT1) une à une et leur dépose à l'endroit de la zone (Z2) correspondant à l'enfilage des ligatures préformées des saucissons. Chaque barre (B) est ainsi positionnée et stabilisée en appui horizontal sur des supports non représentés disposés à partir du châssis de la machine. Le magasin de stockage des barres présente dans sa partie avant une goulotte autorisant le passage une à une des barres pour être transférées sur le moyen de transfert (MT1). En fonction du cycle de fonctionnement de la machine, ladite goulotte est obturée par un moyen de retenue (non représenté) de la barre adjacente. Lorsqu'il y aura lieu à un transfert d'une barre du magasin de stockage vers la zone de positionnement de la barre à charger, ledit moyen de retenue sera escamoté pour autoriser le passage d'une barre à charger.

Selon l'invention, le moyen de transfert (MT1) est réalisé de manière avantageuse sous forme de deux disques (7) montés en rotation sur un axe (8) entre les parois latérales du portique en étant commandés par tous moyens moteurs appropriés. Ces disques présentent une échancrure (7a) servant de logement à une barre. Le profil d'ouverture peut être régulier ou former un bec d'ancrage et de retenue afin de permettre le transfert et le guidage de la barre dans sa position en vue de son chargement. Un guide de positionnement peut le cas échéant être disposé entre le moyen de transfert (MT1) et la zone (Z2) de positionnement de la barre.

Toujours en arrière de la machine, se trouvent disposés à partir des flancs latéraux du portique des seconds moyens de transfert (MT2) qui sont susceptibles de prélever et soulever la barre (B) chargée de saucissons et de la déplacer pour l'amener vers la zone de stockage arrière (ZS) de la machine. Cette zone de stockage est ainsi agencée avec un couloir de guidage incliné vers le bas et l'arrière, de manière à autoriser par gravité le roulement des barres ou un avancement sur convoyeur mécanisé et leur évacuation à l'extrémité de la zone de stockage pour être ensuite évacuée par un opérateur. Un piètement (10) assure le positionnement incliné de cette zone de stockage des barres chargées. Les moyens de transfert (MT2) sont réalisés sous forme de leviers articulés (11) sur un axe (12) monté sur les flancs du portique de la machine et sont commandés selon un cycle préétabli pour être actionnés seulement lorsque la barre est chargée. Ces leviers (11) ont une échancrure (11a) de prise et de positionnement de la barre. Le mouvement s'effectue selon la flèche (F6). Le cas échéant, un peigne écarteur permet de contrôler le positionnement à pas constant des ligatures sur la barre de chargement. Ce peigne est fixé sur les leviers (11) et suit leur mouvement.

Il convient dès lors d'exposer les caractéristiques des mécanismes permettant le chargement des saucissons sur les barres. En se référant aux figures des dessins, la machine est agencée avec deux chemins de guidage (C1) (C2) en circuit fermé qui sont agencés respectivement pour autoriser pour le chemin (C1) le positionnement et le guidage des modules (1) porte pince (2) selon un cycle de translation continu, et pour le chemin (C2) pour autoriser le mouvement relatif transversal des pinces par rapport au module support pour permettre la mise en forme de la ligature du saucisson destiné à être mis sur la barre.

Plus spécifiquement, chaque module (1) est agencé de manière très particulière et comprend un flanc vertical (1a) prolongé par sa partie arrière par une base (1b) aménagée avec deux pattes (1c) (1d) horizontales, aménagées elles-mêmes avec des ouvertures (le) de positionnement. Le chant supérieur horizontal (1f) du module présente une forme en saillie (1g) fixe formant crochet. L'un des côtés (1h) du flanc présente une découpe définissant un évidement horizontal (1m) de guidage et une face de butée verticale (1n). La base (1b) en regard dudit côté (1h) laisse ainsi une ouverture de passage et de coulissement à la partie pince (2). La partie pince est établie sous la forme d'une plaque conformée en L avec un bras (2a) de grande longueur et horizontal susceptible de s'engager et de coulisser dans ledit évidement (1m) formant glissière. Ce bras (2a) se prolonge à l'avant par une patte (2b) verticale présentant en partie supérieure un crochet (2c) en saillie destiné à venir en regard de la forme en saillie (1g) fixe formée sur le module support (1) précité. Ladite pince présente sur sa partie bras une lumière oblongue horizontale (2d) dans laquelle pénètre et déborde la butée (13). La partie arrière de la pince (2) présente un talon (2d) formant patte transversale, dont la fonction sera précisée par la suite.

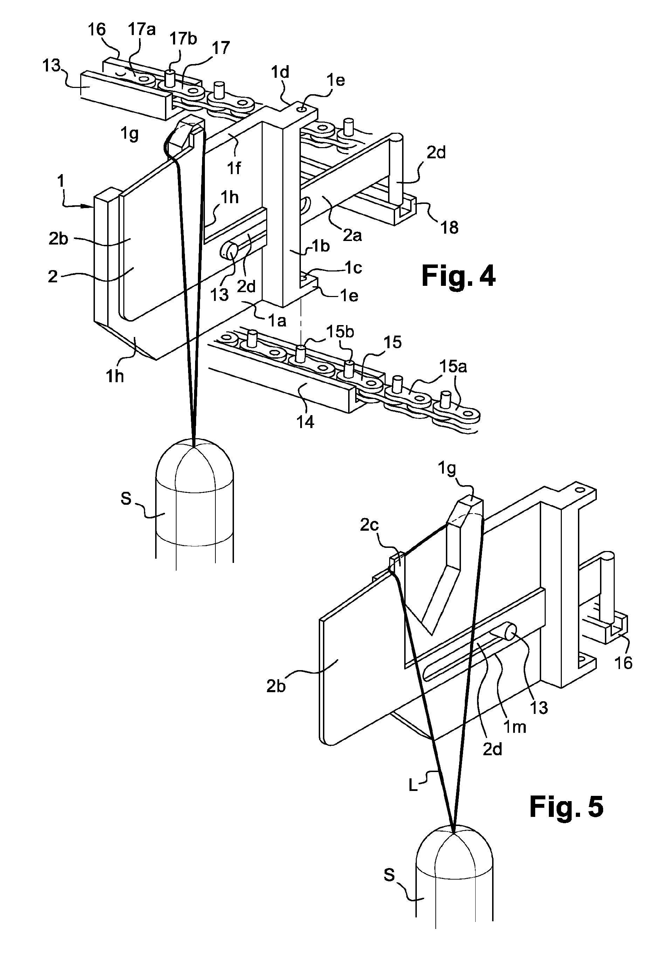

En se référant aux figures 5 et 6, lorsque la pince n'est pas sollicitée en déplacement transversal (figure 5) par rapport au module support, les deux parties en saillie (1g-2c) sont l'une en regard de l'autre formant une unité et autorisant la dépose de la ligature d'un saucisson par l'opérateur et sa suspension.

Lors de la phase opératoire consistant à la mise en forme de la ligature pour former une ouverture permettant son enfilement autour de la barre, c'est le déplacement transversal de la pince (figure 6), sous l'action d'un moyen particulier, qui provoque la mise en forme de la ligature. Plus spécifiquement, la pince est poussée vers l'avant du module dans un plan radial au sens d'avancement des modules. Dans ces conditions, le crochet (2c) est écarté et éloigné de la partie fixe en saillie (1g) du module en mettant en forme la ligature selon un espace d'ouverture suffisant au passage et enfilage de barre. Cet écartement s'effectue en définissant un brin horizontal supérieur de la ligature.

Il convient dès lors de décrire les deux chemins de guidage (C1) (C2). Le premier chemin (C1) comprend un premier rail (14) inférieur horizontal continu en forme de U et recevant intérieurement une chaîne (15) sans fin composée d'une pluralité de maillons (15a), chaque maillon présentant un doigt vertical (15b) s'engageant dans l'ouverture formée sur la patte inférieure du module. Un second rail (16), disposé dans un plan parallèle et supérieur au précédent rail, dans la même configuration linéaire et continue, reçoit également une seconde chaîne (17) à maillons (17a) avec doigt (17b) s'engageant dans l'ouverture formée sur la patte supérieur du module. Ce chemin (C1) est ainsi défini par les deux rails superposés maintenus en positon par rapport au châssis de la machine, définissant ainsi une circulation des modules qui sont parfaitement tenus dans un plan radial par rapport au sens de défilement. Le chemin (C1) présente sur la partie avant de la machine une configuration curviligne (C1a), et en partie arrière, à l'endroit du positionnement de la barre à charger, une configuration rectiligne (C1b), le raccordement en angle (C1c) s'effectuant par des zones courbes.

Un second chemin (C2) est disposé intérieurement au premier chemin et est constitué par un profilé en U continu (18) et qui suit le parcours du chemin de guidage principal. Le chemin de guidage secondaire (C2) présente une partie avant analogue (C2a) dont la caractéristique est de ne pas être concentrique à la partie curviligne (C1a) du circuit principal, en se rapprochant de celui-ci vers la zone d'enfilage des ligatures sur la barre à charger de saucissons. Le second chemin de guidage reçoit en pratique le talon arrière (2d) de la pince (2), et c'est donc lui qui définit la position de chaque pince par rapport à chaque module support et donc la confirmation de la ligature du saucisson. En se référant aux figures 3, 3A, 3B, 3C, le rapprochement du chemin de guidage secondaire du chemin de guidage principal des modules provoque le déplacement radial selon la flèche (F7) de la pince par rapport au module support fixe et la formation de la ligature, afin d'avoir celle-ci comme représenté figure 3C.

Le chemin de guidage secondaire, dans sa partie retour (C2b) correspondant à la zone de positionnement de la barre à charger, est parallèle à la partie rectiligne (C1b) arrière du chemin de guidage principal comme il apparaît figure 3, tout en restant dans des positions de formation de ligature identique selon les figures 3C, 3D.

L'avancement des chaînes dans le chemin de guidage principal s'effectue par tous moyens de motorisation appropriés, le déplacement des modules entraînant ipso facto le déplacement des talons de chaque pince dans le chemin de guidage secondaire.

Il convient dès lors d'exposer le fonctionnement de la machine selon l'invention. En phase initiale opératoire, une barre à charger en provenance du magasin de stockage des barres est prélevée par le premier moyen de transfert (MT1) pour être positionnée en suspension sur des moyens supports disposés à partir du châssis de la machine.

Les modules supports (1) et les pinces associées (2) sont en position de rapprochement (figure 3A). Un nombre de modules quelconque est positionné sur le chemin de guidage principal dépendant des caractéristiques dimensionnelles des produits à mettre en barre (saucissons, saucisses ou similaires) et de leur volume. Un ou deux opérateurs positionnent par le devant de la machine sur lesdits modules et pinces des ligatures successives de saucissons, qui sont alors en suspension, les brins de ligature étant rapprochés (figure 3A).

Après le poste de chargement des saucissons, il convient de mettre en forme les ligatures, c'est-à-dire de les ouvrir. Cela se produit lors du rapprochement du chemin de guidage secondaire du chemin de guidage principal. Le talon de chaque pince se trouve donc poussé radialement par le chemin de guidage secondaire dans un plan radial au sens de défilement des modules, en ouvrant la pince, c'est-à-dire en déplaçant en agissant à la manière d'un ciseau celle-ci par rapport au corps du module, selon la flèche (F7). Lorsque la ligature en position ouverte a été formée, les chemins de guidage (C1) (C2) sont directement parallèles, de sorte à garder une position constante et régulière de leur écartement respectif et donc des parties (1g-2c) supports de la ligature. Celle-ci est ouverte et le déplacement des modules supports de pinces s'effectue à l'arrière de la machine, avec un avancement continu. La barre (B) à charger reçoit par enfilage chacune des ligatures successives de saucissons. Considérant que la barre peut présenter un nombre de gorges x pour réceptionner x saucissons, la machine continue à fonctionner avec la translation pas à pas des modules jusqu'à arriver au positionnement prévu de x ligatures de saucissons en regard de x gorges de la barre. L'automatisme de translation des modules supports de pinces s'arrête, et c'est ensuite le second moyen de transfert (MT2) qui est actionné pour prélever la barre chargée et l'élever entraînant le contact avec les ligatures de saucissons qui viennent alors en suspension sur ladite barre. Celle-ci est translatée par un mouvement rotatif donné aux moyens (MT2) pour positionner la barre chargée dans le magasin de stockage et d'évacuation des barres chargées. Lorsque le dépôt d'une barre chargée est effectué, celle-ci roule par gravité ou est déplacée par convoyage dans le fond du magasin de stockage pour être prélevée, puis les moyens de transfert (MT2) reviennent en position initiale. Une nouvelle barre à charger est mise en place et l'automatisme continu de fonctionner.

La machine selon l'invention offre de très nombreux avantages, une productivité améliorée, une intégration aisée dans une installation de salaison de par son faible encombrement, et une rapidité de traitement.

Plusieurs opérateurs peuvent le cas échéant travailler côte à côte pour le chargement des saucissons à embarrer.

On a décrit le concept de fonctionnement de la machine. Les automatismes, les détecteurs d'anomalie, les moyens de protection du type couvercle (18), capot de protection supérieur ou latéraux équipant la machine selon l'invention relèvent du domaine classique de l'homme de métier et ne sont pas explicités.

## Revendications

1. Machine de chargement sur barres de saucissons, saucisses et similaires frais, du type agencée avec dans sa partie arrière une zone de stockage (Z1) de barres (B) disposées en inclinaison pour amener les barres une à une vers un moyen de transfert (MT1) autorisant le positionnement des barres (4) une à une à un poste (Z2) de chargement de la barre avec une pluralité de saucissons, et dans sa partie avant une zone de chargement des saucissons,
**caractérisée en ce qu'**elle comprend une zone (Z3) à l'avant de la machine permettant le positionnement manuel des ligatures de saucissons par un ou des opérateurs sur des modules (1) déplaçables en translation selon un premier chemin de guidage (C1) extérieur, continu et fermé,
et **en ce que** chaque module est le support d'une pince ciseau (2) déplaçable dans un plan perpendiculaire au sens de défilement des modules, ledit premier chemin de guidage étant tel qu'il permette le chargement des modules supports des blocs pinces, puis la mise sous barres des saucissons,
et **en ce que** chaque ligature (L) en extrémité d'un saucisson (S) est accrochée et suspendue entre le module (1) et sa pince ciseau (2) associée en vue d'être translatées d'une position de prise en charge du saucisson, vers une position d'enfilage de la ligature autour de la barre (2), puis de remise en position,
et **en ce que** la machine est agencée avec un second chemin de guidage (C2) assurant des fonctions de guidage et d'actionnement qui permettent le déplacement relatif de la pince ciseau par rapport à son module support selon la position et phase opératoire,
**et en ce que** les deux chemins de guidage (C1) (C2) en circuit fermé sont agencés respectivement pour autoriser pour le chemin (C1) le positionnement et le guidage des modules (1) porte pince (2) selon un cycle de translation continu, et pour le chemin (C2) pour autoriser le mouvement relatif transversal des pinces par rapport au module support pour permettre la mise en forme de la ligature du saucisson destiné à être mis sur la barre,
et **en ce que** le second chemin (C2) est disposé intérieurement au premier chemin (C1),
et **en ce que** le chemin de guidage secondaire (C2) présente une partie avant (C2a) dont la caractéristique est de ne pas être concentrique à la partie curviligne (C1a) du circuit principal, en se rapprochant de celui-ci vers la zone d'enfilage des ligatures sur la barre à charger de saucissons.

2. Machine, selon la revendication 1, **caractérisée en ce qu'**elle est agencée avec des seconds moyens (MT2) qui transfèrent la barre (B) pleine chargée de saucissons (S) vers une zone de stockage (ZS) des barres pleines de saucissons en vue de leur évacuation et mise par exemple sur des chariots de manutention connus pour le transport dans des chambre de séchage.

3. Machine, selon la revendication 1, **caractérisée en ce que** le magasin de stockage des barres présente dans sa partie avant une goulotte autorisant le passage une à une des barres pour être transférées sur le moyen de transfert (MT1),
et **en ce qu'**en fonction du cycle de fonctionnement de la machine, ladite goulotte est obturée par un moyen de retenue de la barre adjacente ou libérée pour autoriser le passage d'une barre à charger,
**et en ce que** le moyen de transfert (MT1) est réalisé sous forme de deux disques (7) montés en rotation sur un axe (8) entre les parois latérales d'un portique support du châssis de la machine en étant commandés par des moyens moteurs,
et **en ce que** les disques présentent une échancrure (7a) servant de logement à une barre afin de permettre le transfert et le guidage de la barre dans sa position en vue de son chargement.

4. Machine, selon la revendication 2, **caractérisée en ce qu'**en arrière de la machine, se trouvent disposés à partir des flancs latéraux du portique des seconds moyens de transfert (MT2) qui sont susceptibles de prélever et soulever la barre (B) chargée de saucissons et de la déplacer pour l'amener vers la zone de stockage arrière (ZS) de la machine,
et **en ce que** cette zone de stockage est agencée avec un couloir de guidage incliné vers le bas et l'arrière, de manière à autoriser le déplacement par gravité le roulement ou convoyage des barres et leur évacuation à l'extrémité de la zone de stockage,
et **en ce que** les moyens de transfert (MT2) sont réalisés sous forme de leviers articulés (11) sur un axe (12) monté sur les flancs du portique de la machine et sont commandés selon un cycle préétabli pour être actionnés seulement lorsque la barre est chargée,
**et en ce que** les leviers (11) ont une échancrure (11a) de prise et de positionnement de la barre.

5. Machine, selon la revendication 1, **caractérisée en ce que** le chemin (C1) présente sur la partie avant de la machine une configuration curviligne (C1a), et en partie arrière, à l'endroit du positionnement de la barre à charger, une configuration rectiligne (C1b), le raccordement en angle (C1c) s'effectuant par des zones courbes,
et **en ce que** le chemin de guidage secondaire, dans sa partie retour (C2b) correspondant à la zone de positionnement de la barre à charger, est parallèle à la partie rectiligne (C1b) arrière du chemin de guidage principal.

6. Machine, selon l'une quelconque des revendications 1 à 5, **caractérisée en ce que** chaque module (1) comprend un flanc vertical (1a) prolongé par sa partie arrière par une base (1b) aménagée avec deux pattes (1c) (1d) horizontales, comprenant des ouvertures de positionnement pour s'adapter sur des moyens se déplaçant dans le premier chemin de guidage (C1),
et **en ce que** le module autorise le déplacement transversal et horizontal limité de la pince ciseau (2), ladite pince étant aménagée avec un talon (2d) positionné dans le chemin de guidage secondaire (C2),
et **en ce que** le module et la pince sont agencés avec des formes en saillies (1g) fixes pour le module en formant crochet (2c) pour la pince susceptible de se rapprocher ou de s'écarter l'une de l'autre pour autoriser la mise en place de la ligature d'un saucisson, puis de mise en forme.

7. Machine, selon la revendication 6, **caractérisée en ce que** chaque module (1) comprend un flanc vertical (1a) prolongé par sa partie arrière par une base (1b) aménagée avec deux pattes (1c) (1d) horizontales, aménagées elles-mêmes avec des ouvertures (1e) de positionnement, le chant supérieur horizontal (1f) du module présentant une forme en saillie (1g) fixe formant crochet, l'un des côtés (1h) du flanc présentant une découpe définissant un évidement horizontal (1m) de guidage et une face de butée verticale (1n), la base (1b) en regard dudit côté (1h) laissant une ouverture de passage et de coulissement à la partie pince (2),
et **en ce que** la partie pince est établie sous la forme d'une plaque conformée en L avec un bras (2a) de grande longueur et horizontal s'engageant et coulissant dans ledit évidement (1m) formant glissière, le bras (2a) se prolongeant à l'avant par une patte (2b) verticale présentant en partie supérieure un crochet (2c) en saillie destiné à venir en regard de la forme en saillie (1g) fixe formée sur le module support (1) précité, ladite pince présentant sur sa partie bras une lumière oblongue horizontale (2d) dans laquelle pénètre et déborde la butée (13), la partie arrière de la pince (2) présentant un talon (2d) formant patte transversale.

8. Machine, selon l'une quelconque des revendications 5, 6 et 7, **caractérisée en ce que** le premier chemin (C1) comprend un premier rail (14) inférieur horizontal continu en forme de U et recevant intérieurement une chaîne (15) sans fin composée d'une pluralité de maillons (15a), chaque maillon présentant un doigt vertical (15b) coopérant avec le module (1) correspondant, un second rail (16), disposé dans un plan parallèle et supérieur au précédent rail, dans la même configuration linéaire et continue, reçoit une seconde chaîne (17) à maillons (17a) avec doigt (17b) coopérant avec le module (1) correspondant.

9. Machine, selon l'une quelconque des revendications 5 à 8, **caractérisée en ce que** le second chemin de guidage (C2) est constitué par un profilé en U continu (18) coopérant avec la pince ciseau (2).

10. Machine, selon la revendication 4, **caractérisée en ce qu'**elle comprend, à partir des leviers (11), un peigne écarteur permettant de contrôler le positionnement à pas constant des ligatures de saucissons sur la barre de chargement.
